(19)

Europäisches Patentamt

European Patent Office

Office européen des brevets

(11) **EP 4 546 658 A1**

(12) **EUROPEAN PATENT APPLICATION**

(43) Date of publication:
**30.04.2025 Bulletin 2025/18**

(21) Application number: **23205149.0**

(22) Date of filing: **23.10.2023**

(51) International Patent Classification (IPC):
**H04B 7/024** (2017.01)    **H04B 7/0456** (2017.01)
**H04B 7/06** (2006.01)

(52) Cooperative Patent Classification (CPC):
**H04B 7/024; H04B 7/0465; H04B 7/0691**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **SOHRABI, Foad**
  **Maple - Ontario, L6A0K3 (CA)**
• **DU, Jinfeng**
  **West Windsor - NJ, 08550 (US)**
• **VISWANATHAN, Harish**
  **Basking Ridge - NJ, 07920 (US)**
• **WU, Meng**
  **89077 Ulm (DE)**

(74) Representative: **Nokia EPO representatives
Nokia Technologies Oy
Karakaari 7
02610 Espoo (FI)**

(54) **TWO-STAGE BEAMFORMING WITH PER-ANTENNA POWER CONSTRAINT FOR COVERAGE ENHANCEMENT**

(57) Various example embodiments relate to a method and apparatus for two-stage beamforming. The method comprises estimating an effective channel between at least one user equipment and a plurality of access point elements; designing a short-term precoder for the effective channel, the short-term precoder being designed by solving a coverage maximization problem under a sum power constraint and at least one per-antenna power constraint; and using the short-term precoder for two-stage beamforming.

FIG. 3A

**EP 4 546 658 A1**

## Description

## TECHNICAL FIELD

Various example embodiments relate to two-stage beamforming. Some example embodiments relate to two-stage beamforming with per-antenna power constraint for coverage enhancement.

## BACKGROUND

By utilizing the higher frequency bands in wireless communication networks, the coverage of base stations (BSs) can decrease. Therefore, the coverage enhancement techniques may be required to cope with the coverage loss. One way to cope with this coverage loss is to employ (massive) multiple-input multiple-output (MIMO) architectures at the BSs.

However, in practice, to unlock the full advantages of massive MIMO systems in improving the spectral efficiency and coverage, it may be needed to keep the channel state information (CSI) acquisition overhead, computational complexity needed for signal processing, and/or the communications between different components of the BS including radio unit (RU) and baseband unit (BB) at a reasonable level (e.g., as minimum as possible while achieving most of the performance gain).

## SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure provide a two-stage beamforming that also accounts for the power overshooting issue across the antennas.

This and other benefits may be achieved by the features of the independent claims. Further example embodiments are provided in the dependent claims, the description, and the drawings.

According to a first aspect, an apparatus comprises: at least one processor; and at least one memory including computer program code; the at least one memory and the computer program code configured to, with the at least one processor, cause the apparatus at least to perform operations comprising: estimating an effective channel between at least one user equipment and a plurality of access point elements; designing a short-term precoder for the effective channel, the short-term precoder being designed by solving a coverage maximization problem under a sum power constraint and at least one per-antenna power constraint, wherein the sum power constraint ensures that a total transmitted power by the plurality of access point elements remains below a first threshold, and wherein the at least one per-antenna power constraint ensured that a transmitted power for each of at least one of the plurality of access point elements remains below a respective second threshold; and using the short-term precoder for two-stage beamforming.

In example implementations of the first aspect, the operations further comprise: formulating the coverage maximization problem under the sum power constraint and the at least one per-antenna power constraint as a convex optimization problem.

In example implementations of the first aspect, the operations further comprise: reformulating the coverage maximization problem by matrix lifting.

In example implementations of the first aspect, the operations further comprise: reformulating the coverage maximization problem by relaxing at least one rank-one constraint.

In example implementations of the first aspect, the operations further comprise: determining a per-antenna power adjustment matrix satisfying the at least one per-antenna power constraint by equality for at least one antenna of a plurality of antennas; and using the short-term precoder and the per-antenna power adjustment matrix for the two-stage beamforming.

In example implementations of the first aspect, designing the short-term precoder comprises setting the short-term precoder as a maximum ratio transmission solution.

In example implementations of the first aspect, the operations further comprise: estimating a signal-to-noise ratio; and selecting a modulation-coding scheme based on the estimated signal-to-noise ratio.

In example implementations of the first aspect, estimating the signal-to-noise ratio comprises: determining a signal-to-noise ratio under the sum power constraint; determining an average of a gap between the estimated signal-to-noise ratio under the sum power constraint and the signal-to-noise ratio to be estimated; and determining the signal-to-noise ratio to be estimated based on the signal-to-noise ratio under the sum power constraint and the average of the gap.

In example implementations of the first aspect, estimating the signal-to-noise ratio comprises: using a deep neural network to estimate the signal-to-noise ratio, wherein the deep neural network takes one or more of the following as input: a location of a user equipment, an estimation of the effective channel, a first signal-to-noise ratio value and a corresponding power distribution for a first baseline which uses maximum ratio transmission as short-term precoder and linear scaling to satisfy the at least one per-antenna power constraint, or a second signal-to-noise ratio value for a second baseline which uses maximum ratio transmission as the short-term precoder and linear scaling to only satisfy the sum power constraint.

In example implementations of the first aspect, the coverage maximization problem is to maximize a signal-to-noise ratio.

In example implementations of the first aspect, the coverage maximization problem is to maximize a minimum signal-to-noise ratio over a plurality of user equipments.

In example implementations of the first aspect, the operations further comprise: determining a long-term precoder; and using the short-term precoder and the long-term precoder for the two-stage beamforming.

In example implementations of the first aspect, the first threshold is based on a maximum tolerated amount of interference generated by the plurality of access point elements.

In example implementations of the first aspect, the second threshold is based on an operating range of a power amplifier associated with the access point element.

In example implementations of the first aspect, the plurality of access point elements comprises one or more of: a plurality of antennas, a plurality of panels, or a plurality of access points.

In example implementations of the first aspect, the coverage maximization problem is under a per-antenna power constraint for each access point element, wherein, for each access point element, the per-antenna power constraint ensured that a transmitted power for the access point element remains below a respective second threshold.

According to a second aspect, a method comprises: estimating an effective channel between at least one user equipment and the plurality of access point elements; designing a short-term precoder for the effective channel by solving a coverage maximization problem under a sum power constraint and at least one per-antenna power constraint, wherein the sum power constraint ensures that a total transmitted power by the plurality of access point elements remains below a first threshold, and wherein the at least one per-antenna power constraint ensured that a transmitted power for each of at least one of the plurality of access point elements remains below a respective second threshold; and using the short-term precoder for two-stage beamforming.

In example implementations of the second aspect, the method further comprises: formulating the coverage maximization problem under the sum power constraint and the at least one per-antenna power constraint as a convex problem.

In example implementations of the second aspect, the method further comprises: determining a per-antenna power adjustment matrix satisfying the at least one per-antenna power constraint by equality for at least one antenna of a plurality of antennas; and using the short-term precoder and the per-antenna power adjustment matrix for the two-stage beamforming.

According to a third aspect, a computer program comprises instructions, which when executed by an apparatus, cause the apparatus to perform the method according to any implementation of the second aspect.

Example embodiments of the present disclosure can thus provide apparatuses, methods, computer programs, computer program products, or computer readable media for enabling a handover or cell switch with short delay. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

## DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:

FIG. 1 illustrates an example communication network.
FIG. 2 illustrates an example of a two-stage precoder.
FIG. 3A and 3B illustrate an example method for two-stage beamforming.
FIG. 4 illustrates an example of a two-stage precoder with power adjustment.
FIG. 5A and 5B illustrate an example method for two-stage beamforming with power adjustment.
FIG. 6 is block diagram of an example DNN-based SNR estimation method using power adjustment.
FIG. 7 illustrates an example of an apparatus configured to practice one or more example embodiments.
FIG. 8 illustrates a method according to an example embodiment.

Like references are used to designate like parts in the accompanying drawings.

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

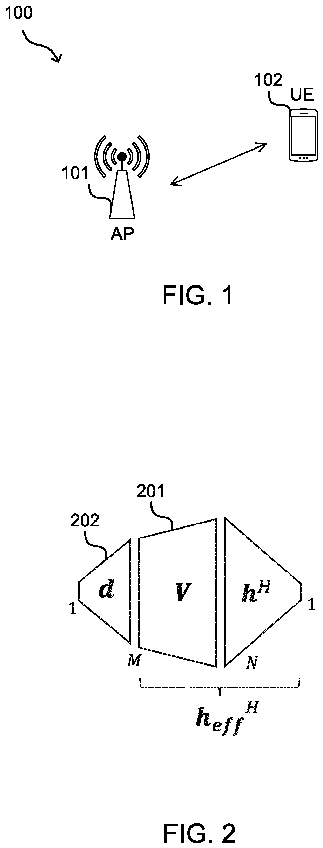

FIG. 1 illustrates an example of a communication network 100. Communication network 100 may comprise one or more devices, which may be also referred to as client nodes, user nodes, or user equipment (UE), represented in this example by UE 101. UE 101 may communicate with one or more access nodes or access points (APs), represented in this example by AP 102. UE 101 may in general communicate with any number of APs 102. AP 102 may serve one or more UE 101.

Each AP 102 may comprise one or more antennas. Each antenna may comprise one or more panels. UE 101 may communicate with a plurality of access point elements, comprising one or more APs, one or more antennas, and/or one or more panels.

Communications between UE 101 and AP 102 may be bidirectional and hence any of these entities may be configured to operate as a transmitter and/or a receiver. Transmissions from UE 101 to AP 102 may be referred to as uplink (UL) transmissions. Transmissions from an AP 102 to a UE 101 may be referred to as downlink (DL) transmissions.

Communication network 100 may be a massive MIMO network. Communication network 100 may be configured for example in accordance with the 5G or 6G digital cellular communication network, as defined by the 3rd Generation Partnership Project (3GPP). It is however appreciated that example embodiments presented herein are not limited to this example network and may be applied in any present or future wireless communication networks, or combinations thereof, for example other type of cellular networks, short-range wireless networks, broadcast or multicast networks, or the like.

An AP may be also called a base station (e.g., gNodeB), or a radio access network (RAN) node and it may be part of a RAN between the core network and the UE 110. Functionality of an access point may be distributed between a central unit (CU), for example a gNB-CU, and one or more distributed units (DU), for example gNB-DUs. It is therefore appreciated that access node functionality described herein may be implemented at a gNB or divided between a gNB-CU and a gNB. Network elements such gNB, gNB-CU, and gNB-DU may be generally referred to as network nodes or network devices. Although depicted as a single device, a network node may not be a stand-alone device, but for example a distributed computing system coupled to a remote radio head. For example, a cloud radio access network (cRAN) may be applied to split control of wireless functions to optimize performance and cost.

Two-stage beamforming (also known as two-tier beamforming, beamspace precoding or joint spatial division and multiplexing (JSDM)) provides a good trade-off between the performance and communication/computation overhead. In the two-stage beamforming, a (e.g., wideband and high-dimensional) long-term precoder is typically designed based on the long-term channel statistics while the (e.g., low-dimensional) short-term precoder is designed based on the instantaneous effective channel state information (CSI) for a given long-term precoder. Therefore, it is only needed to obtain instantaneous effective and low-dimensional CSI for updating the short-term precoder in each coherence time which potentially leads to reduction in CSI acquisition overhead and the computational complexity of designing the precoder. Furthermore, the two-stage beamforming can help reduce the required fronthaul capacity between the RU and BB.

Two-stage beamforming typically focuses on maximizing the spectral efficiency (SE) under the conventional sum power constraint (SPC). Example embodiments provide two-stage beamforming that also accounts for the power overshooting issue across the antennas which is a critical issue in practical systems.

In the two-stage beamforming, the long-term precoder (for example denoted by V) is typically designed based on the long-term channel statistics of the channel. So, the remaining question is how to design the short-term precoder based on the instantaneous effective CSI for a given long-term precoder.

While precoding schemes such as maximum ratio transmission (MRT) under SPC can achieve satisfactory performance, they typically lead to the power shooting issue at the antennas. This is because the effective power at some antennas may exceed the limit that is tolerable due to constructive combining of signals from multiple layers/beams/frequencies.

Example embodiments provide a method to design the two-stage precoder in order to maximize the cell coverage while avoiding the power overshooting issue.

Example embodiments provide a method to design the short-term precoder d within the two-stage precoding architecture in order to maximize the coverage (e.g., maximizing the signal-to-noise ratio (SNR) in a single-user/layer scenario) while accounting for SPC as well as per-antenna power constraints (PAPC) to avoid the overshooting issue.

Example embodiments may be applied to a single-subcarrier/band setting, and to multiple-carrier/-band setting in which each carrier/band is used to serve a single-user/layer.

Example embodiments formulate the coverage maximization problem under SPC and PAPC constraints. Example embodiments formulate the problem as a convex optimization problem. Therefore, example embodiments can use a semidefinite programming (SDP) solver to design the short-term precoder.

Example embodiments consider, in addition to SPC, PAPCs where the number of constraints scales with the number of antennas N. Example embodiments include a per-antenna power adjustment after the long-term precoder in the data-transmission phase. A simple MRT in the direction of the effective CSI (which is here also called short-term channel), i.e., $d = h_{eff}$, may be used to design the short-term precoder d. The diagonal power adjustment matrix $\Gamma$ may then be set to make sure that each antenna is utilizing its maximum allowed power (e.g., satisfying the PAPC by equality for each antenna).

Example embodiments provide SNR estimation for two-stage beamforming with power adjustment. The final effective gain $\boldsymbol{h}^H \Gamma \boldsymbol{Vd}$ (with $\boldsymbol{h}$ being the high-dimensional channel) may not be available at the BS (transmitter) for modulation-coding scheme selection and rate adaptation. To address this issue, example embodiments use a round of downlink channel training plus feedback in which the SNR is measured at the user and is feedback to the BS. Other example embodiments provide SNR estimation methods to reduce the communication overhead for obtaining the SNR value at the BS.

Example SNR estimation methods recognize that the SNR gap (in dB scale) between the two-stage precoding method with power adjustment satisfying the PAPC and the two-stage precoding under SPC is not significantly function of the channel realization. Example SNR estimation methods therefore use the average gap between these two methods to offset the SNR of the conventional method under SPC to estimate the SNR of the two-stage precoding method with power adjustment under PAPC.

Example SNR estimation methods use a deep neural network (DNN) that provides an estimate for the SNR of example two-stage precoding methods with power adjustment under PAPC.

Example methods are discussed above for a single-carrier setting in which only a single-user is served, but the same example methods can be readily applied to the multi-carrier/band setting in which each subcarrier/band is used to serve a single user. For example, the maximum DL transmit Equivalent isotropic radiated power (EIRP) (e.g., Total Radiated Power (TRP) + antenna gain) may be upper bounded e.g., by FCC EIRP limit defined as power spectral density. For example, for FR1, the FCC EIRP for non-rural is 62 dBm/MHz, and the max EIRP scales linearly with increased bandwidth, reaching 82dBm/100MHz. In the multi-carrier setting, the long-term precoder V is designed based the long-term CSI of all the served users over all subcarriers/bands (e.g., by using eigen beamforming which utilizes the transmit covariance matrix of the channels averaged over all frequencies, or by using directional beams including discrete Fourier transform (DFT) beams which might be based on UEs' feedback but with periodicity longer than coherence time of the channel). Given such a long-term precoder, and by considering the practical per-subcarrier/band power constraints for SPC and PAPC, the remaining problem for each subcarrier/band serving one user is the same as the single carrier setting so the example methods described for a single-carrier setting can be used.

Example methods may also be used to satisfy the power constraints over a set of subcarriers (e.g., SPC: the sum of transmitted powers over the set of subcarriers is less than a first threshold; PAPC: the sum of per-antenna powers over the set of subcarriers is less than a second threshold). In the following, the present disclosure focuses on the per-subcarrier power constraints. However, the present disclosure may also apply to other power constraints such as power constraints over a set of subcarriers.

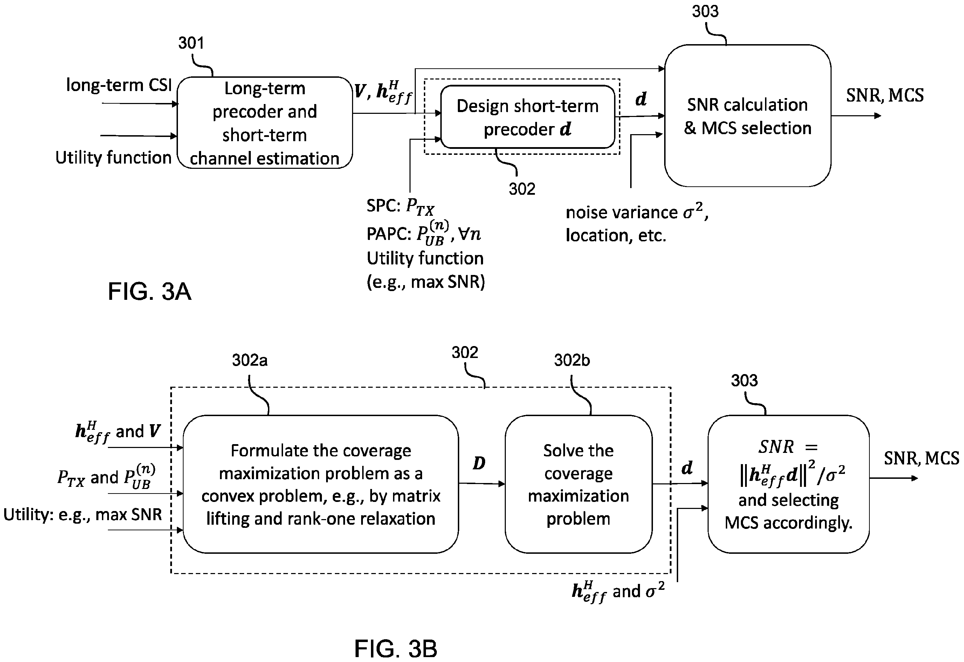

FIGs 3A and 3B illustrate an example of a method 300 for beamspace precoding. Method 300 may be implemented at a BS (e.g., gNodeB).

As illustrated by FIG. 2, a precoder 200 may comprise a long-term precoder 201 (denoted by V) and a short term precoder 202 (denoted by d). The short term precoder 202 may precede the long-term precoder 201. The following supposes a single-antenna user and a BS with N antennas. The 1 × N channel is noted $\boldsymbol{h}^H$.

At operation 301, method 300 may determine the long-term precoder.

The long term precoder may be designed based on some statistics of the channel. For example, it can use eigen beamforming of the covariance matrix of the channel. It is assumed that the long term precoder of dimension N × M is accessed or calculated as $\boldsymbol{V}$ (where N » M).

At operation 301, method 300 may estimate the effective channel (or short-term channel) between the user equipment and the plurality of access point elements. Estimating the effective channel may comprise determining instantaneous CSI (or short-term CSI) for the determined long-term precoder. The effective channel (or short-term channel) (of size 1 × M) may be estimated as

$$h_{eff}^H = h^H V.$$

At operation 302, method 300 may design the short-term precoder. The short-term precoder may be designed by solving a coverage maximization problem under a sum power constraint (SPC) and at least one per-antenna power constraint (PAPC).

The SPC may ensure that the total radiated/transmitted power by all AP elements (e.g., all antennas, panels, and/or APs) remain below a first threshold. The first threshold may be set to limit an amount of interference generated by the plurality of access point elements. The first threshold may be set by the regulatory entities to limit the amount of interference that a BS can cause to other cells/networks and/or to take the amount of electromagnetic field (EMF) exposure under control. For example, the maximum DL transmit EIRP (e.g., Total Radiated Power (TRP) + antenna gain) may be upper bounded e.g., by FCC EIRP limit defined as power spectral density.

In the precoding schemes under only SPC, the per AP element (e.g., antenna, panel, and/or AP) power may vary a lot especially for (massive) MIMO systems. For example, it might be possible that those schemes design the power of some of the AP element (e.g., antenna, panel, and/or AP) to be larger than their maximum individual limits in which their corresponding power amplifiers are operating in their linear regimes. The PAPC may ensures that the radiated/transmitted power by each AP element (e.g., antenna, panel, and/or AP) of all (or of a subset of) the AP elements (e.g., antennas, panels, and/or APs) remains below a respective second threshold. The second threshold may be set for each AP element (e.g., antenna, panel, and/or AP) based on respective operating range of a corresponding power amplifier (e.g., maximum limit in which the corresponding power amplifier is operating in its linear regime).

The short-term precoder of dimension M × 1 (noted d) can be designed based on the instantaneous realization of $h_{eff}^H = h^H V$. In such a system, the total power can be computed as $Trace(Vdd^H V^H) = d^H V^H Vd$. Furthermore, the per-antenna power can be calculated as $\|v_n^H d\|^2 = d^H v_n v_n^H d$, where $v_n^H$ is the n-th row of *V*.

At operation 303, method 300 may calculate the SNR and select a modulation-coding scheme (MCS) according to the calculated SNR.

The SNR of the communication may be calculated as $SNR = d^H V^H hh^H Vd$. To that end, a unit variance additive white Gaussian at the user device may be assumed.

At operation 302, the short-term precoder may be designed to maximize the SNR under SPC and one or more PAPCs. This can be formulated as:

$$\max_{d} \quad d^H V^H hh^H Vd$$

$$s.t. \quad d^H V^H Vd \leq P_{TX}$$

$$d^H v_n v_n^H d \leq P_{UB}, \forall n \in \{1, \ldots, N\}$$

By considering the fact that the columns of the long-term precoder *V* are typically orthogonal, i.e., $V^H V = I_M$ (e.g., in the eigen beamforming or DFT beamforming), the coverage maximization problem can be simplified to:

$$\max_{d} \quad \left\| h_{eff}^H d \right\|^2$$

$$s.t. \quad \|d\|^2 \leq P_{TX}$$

$$\|v_n^H d\|^2 \leq P_{UB}, \quad \forall n.$$

Operation 302 may comprise operation 302a and operation 302b.

At operation 302a, method 300 may reformulate the coverage maximization problem as a convex optimization problem.

In particular, method 300 may reformulate the coverage maximization problem by matrix lifting. By using matrix lifting and defining $A_0 = h_{eff} h_{eff}^H$, $A_n = v_n v_n^H$, and $D = dd^H$, the coverage maximization problem can be formulated as:

$$\max_{D} \quad trace(DA_0)$$

$$s.t. \quad trace(D) \leq P_{TX}$$

$$P_{LB} \leq trace(DA_n) \leq P_{UB}, \forall n$$

$$rank(D) = 1$$

The coverage maximization problem would be a convex optimization problem without the rank-one constraints. At operation 302a, method 300 may reformulate the coverage maximization problem by relaxing the rank-one constraints (e.g., SDP relaxation or semidefinite relaxation (SDR)). The rank one constraint may be formulated as rank(D)= 1, which requires the rank of the matrix D to be one. This means that matrix D will have only one non-zero singular value (or equivalently only one non-zero eigen value since it is a square Hermitian matrix).

At operation 302b, the design of short-term precoder *d* may be determined by solving the coverage maximization problem. In particular, the design of short-term precoder *d* may be determined based on the optimal solution of *D* by using eigen value decomposition. It can be shown, e.g., by following similar steps as in A. Wiesel, Y. C. Eldar, and S. Shamai, "Zero-Forcing Precoding and Generalized Inverses," in IEEE Transactions on Signal Processing, vol. 56, no. 9, pp. 4409-4418, Sept. 2008, that, by relaxing the rank-one constraints (e.g., SDP relaxation or semidefinite relaxation (SDR)), and solving the remaining problem, the optimal solution of the relaxed problem is still rank one. It is thus possible to simply recover the design of short-term precoder *d* based on the optimal solution of *D* by using eigen value decomposition. This make it possible to transform the precoding design problem under the desired power constraints as a convex optimization problem, where conventional convex optimization tools can be used to tackle the problem.

Example embodiments of method 300 achieve the optimal performance under the precoder structure illustrated in FIG. 2.

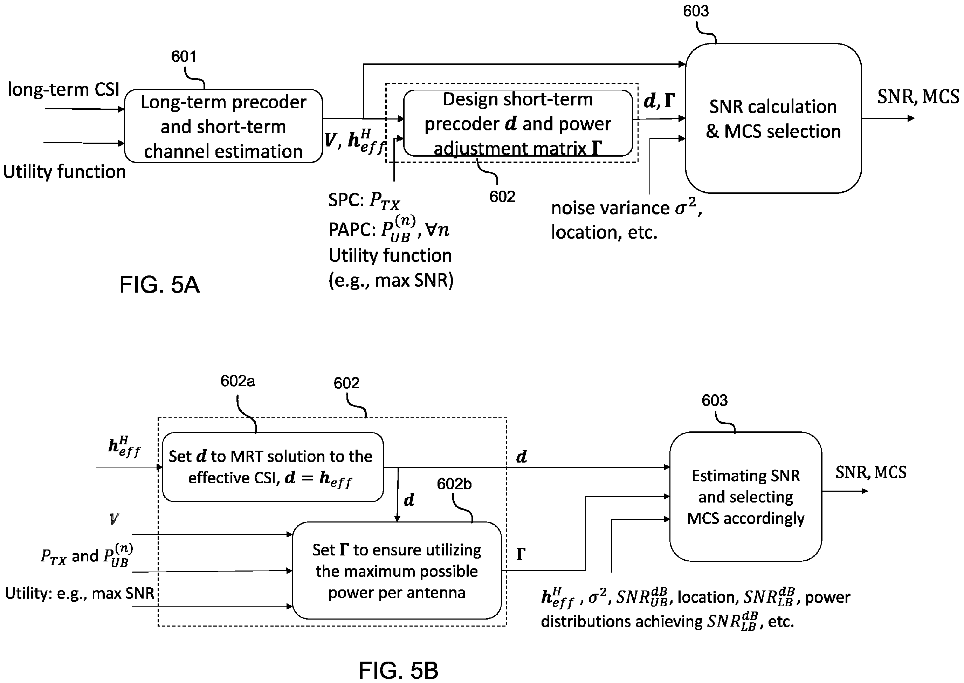

FIGs 5A and 5B illustrate an example method for two-stage beamforming.

Example embodiments consider per-antenna power constraints (PAPCs) in addition to SPC. The number of constraints scales with the number of antennas *N*, the dimensionality of design variable *d is M « N* in the complex domain. To get around this problem, example embodiments perform per antenna power adjustment.

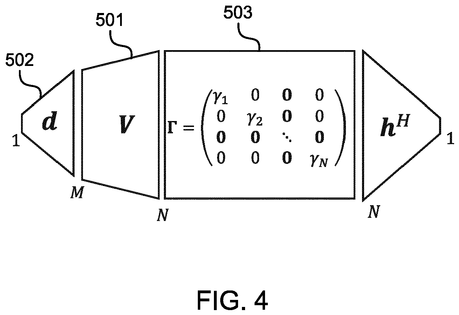

As illustrated by FIG. 4, the precoder may comprise a long-term precoder 501 (denoted $V$), a short term precoder 502 (denoted $d$), and a per-antenna power adjustment 503 (denoted by a diagonal matrix $\Gamma$). The long-term precoder 501 may precede the short term precoder 502, which in turn precedes the per-antenna power adjustment 503. The overall precoder is $w = \Gamma Vd$, and the SPC and PAPC constraint can be written as $\|w\|^2 \le P_{TX}$ and $|w(n)|^2 \le P_{UB}$, where $w(n)$ denotes the n-th element of $w$. The long-term precoder $V$ and the effective CSI $h_{eff}^H = h^H V$ may be determined or estimated.

At operation 602, method 500 may design the short-term precoder and per-antenna power adjustment 503. Operation 602 may comprise operation 602a and 602b.

At operation 602a, method 500 may determine the short-term precoder. The short-term precoder may be determined by solving a coverage maximization problem under a sum power constraint and at least one per-antenna power constraint. In particular, the short-term precoder $d$ may be set as the maximum ratio transmission (MRT) solution for the effective channel, i.e., $d = h_{eff}$.

At operation 602b, method 500 may determine the per-antenna power adjustment 503. It may be assumed that $P_{TX}$ is in the order of $N \times P_{UB}$, i.e., $P_{TX} = N \times P_{UB}$. The power adjustment matrix $\Gamma$ 503 may be determined such that each element of precoder $w = \Gamma Vd$ is utilizing the entire per antenna power, e.g.,

$$w(n) = P_{UB}.$$

At operation 603, method 500 may calculate the SNR and select a modulation-coding scheme (MCS) according to the calculated SNR.

The final effective gain $h^H \Gamma Vd$ may not be available at the BS (transmitter) for modulation-coding scheme selection and rate adaptation. Example embodiments perform a round of downlink channel training plus feedback in which the SNR is measured at the user and is provided to the BS as feedback. Alternatively, to reduce the communication overhead for obtaining the SNR value at the BS, the following SNR estimation methods may be used.

Example embodiments recognize that the SNR gap (in dB scale) between the two-stage precoding method with power adjustment satisfying the PAPC and the two-stage precoding under SPC (without power adjustment) is not significantly function of the channel realization. Example embodiments thus use the average a gap between these two methods to offset the SNR of the method under SPC to estimate the SNR under PAPC. The SNR in dB/linear scale may be denoted by $SNR_x^{dB}$ or $SNR_x^{lin}$ and the SNR of the conventional method under SPC by $SNR_{UB}^{dB}$ or $SNR_{UB}^{lin}$. Example embodiments estimate $SNR_x^{dB}$ by

$$SNR_{UB}^{dB} - pow2dB(E[SNR_{UB}^{lin}/SNR_x^{lin}])$$

where the expectation is over the channel distribution and $pow2dB(.)$ operator converts linear scale to dB scale.

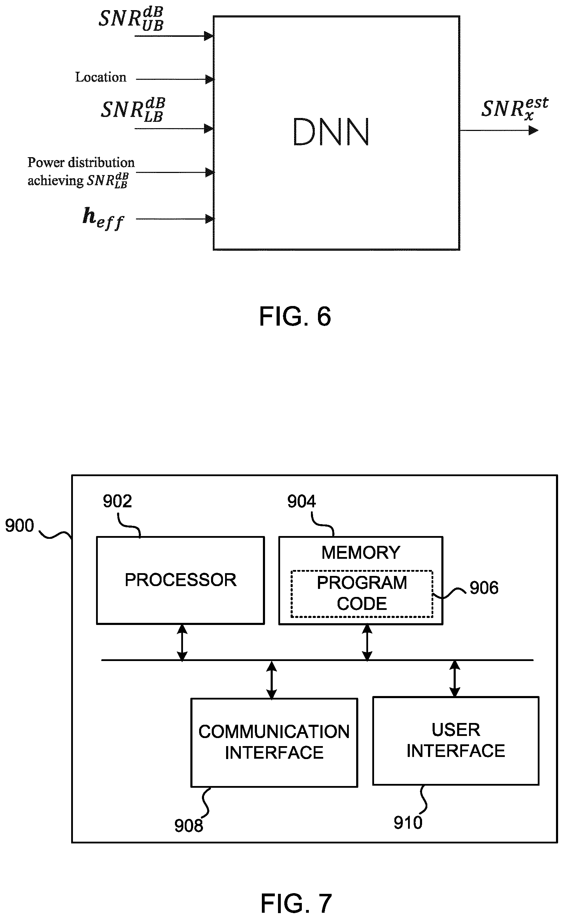

As illustrated by FIG. 6, example embodiments use a deep neural network (DNN) that takes the available information and provides an estimate for $SNR_x^{dB}$. In particular, example embodiments may consider one or more of the following inputs to the DNN: Location (e.g., 3-dimensional coordinates of the user's location), effective CSI $h_{eff}^H$, the SNR value and the corresponding power distribution for a baseline which uses MRT short-term precoder and linear scaling to satisfy the PAPCs (this SNR value provides a lower bound for the SNR of the method with power adjustment), the SNR value for a baseline which uses MRT short-term precoder and linear scaling to only satisfy SPC (this SNR value provides an upper bound for the SNR of the method with power adjustment). To train the DNN, example embodiments adopt a supervised learning over a set of training data set consisting of the high-dimensional channel for which there is access to the ground truth of $SNR_x^{dB}$.

Example embodiments described above for the single-carrier setting can be extended to the multi-carrier setting. In example embodiments there are $K$ users each of which is served by a single subcarrier/band. Therefore, in total there are $K$ subcarriers/bands. The (wide-band) long-term precoder $V$ may designed based on the long-term CSI of all the served users over all subcarriers/bands (e.g., by using eigen beamforming which utilizes the transmit covariance matrix of the channels averaged over all frequencies, or by using directional beams including DFT beams which might be based on UEs' feedback but with periodicity longer than coherence time of the channel). For such a given long-term precoder, and by considering the practical per-subcarrier/band power constraints for SPC and PAPC, the remaining problem (without the power adjustment consideration) for each subcarrier/band (e.g., subcarrier k) serving one user can be written as:

$$\max_{d_k} \quad d_k^H V^H h_k^H V d_k$$

$$s.t. \quad d_k^H V^H V d_k \le P_{TX}^k$$

$$d_k^H v_n v_n^H d_k \le P_{UB}^k, \forall n \in \{1, ..., N\}$$

The above coverage maximization problem has the same structure as the coverage maximization problem for described above for the single-carrier setting. The same SDP-based algorithm can thus be used to solve the problem. Further, since the structure of the problem and the power constraints remain the same, the power adjustment methods described above can also be used to enhance the coverage.

Example embodiments described above can also be applied to the setting in which the power constraints are over the entire carriers/bands. For example, in this case, the coverage maximization problem may be modeled as maximizing the minimum SNR over all set of users, the problem can be written as:

$$\max_{d_k} \min_{k} \quad d_k^H V^H h_k^H V d_k$$
$$s.t. \quad \sum d_k^H V^H V d_k \le P_{TX}$$

$$\sum_k^k d_k^H v_n v_n^H d_k \le P_{UB}, \forall n \in \{1, \dots, N\}.$$

The steps described above for the single-carrier setting (including the matrix lifting) can be applied to write the above problem as a convex optimization problem and solve it optimally. Other objective function including sum rate/SNR maximization can be treated similarly.

The two-stage beamforming methods described herein are applicable to a wide range of MIMO precoding architectures including: fully digital precoding and hybrid analog-digital precoding (e.g., analog precoder as the long-term precoder), centralized MIMO and distributed MIMO, single-carrier and multi-carrier.

Example embodiments proposes efficient two-stage beamforming methods for enhancing the cell coverage of the wireless networks. Example embodiments account for the per-antenna power constraints (PAPCs) imposed by practical hardware constraints such as power amplifier limitations.

The performance of at least some example embodiments in terms of the coverage is close to optimal.

FIG. 7 illustrates an example of an apparatus 900 configured to practice one or more example embodiments. Apparatus 900 may be implemented as a base station (e.g., gNodeB), a baseband unit (BBU), Centralized Radio Access Network (C-RAN), or virtualized radio access network (V-RAN). Apparatus 900 may comprise a device configured to implement functionality described herein. Apparatus 900 may comprise at least one processor 902. The at least one processor 902 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 900 may further comprise at least one memory 904. The memory 904 may be configured to store, for example, computer program code or the like, for example operating system software and application software. The memory 904 may comprise one or more volatile memory devices, one or more nonvolatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 904 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

Apparatus 900 may further comprise a communication interface 908 configured to enable apparatus 900 to transmit and/or receive information. The communication interface 908 may comprise an internal or external communication interface, or a radio interface. Apparatus 900 may further comprise other components and/or functions such as for example a user interface (not shown) comprising at least one input device and/or at least one output device. The input device may take various forms such a keyboard, a touch screen, or one or more embedded control buttons. The output device may for example comprise a display, a speaker, or the like.

When apparatus 900 is configured to implement some functionality, some component and/or components of apparatus 900, such as for example the at least one processor 902 and/or the at least one memory 904, may be configured to implement this functionality. Furthermore, when the at least one processor 902 is configured to implement some functionality, this functionality may be implemented using program code 906 comprised, for example, in the at least one memory 904.

The functionality described herein may be performed, at least in part, by one or more computer program product components such as software components. According to an example embodiment, apparatus 900 comprises a processor or processor circuitry, such as for example a microcontroller, configured by the program code 906, when executed, to execute the embodiments of the operations and functionality described herein. Program code 906 is provided as an example of instructions which, when executed by the at least one processor 902, cause performance of apparatus 900.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 900 may be configured to perform, or cause performance of, method(s) described herein or comprise means for performing method(s) described herein. In one example, the means comprises the at least one processor 902, the at least one memory 904 including program code 906 configured to, when executed by the at least one processor 902, cause apparatus 900 to perform the method(s). In general, computer program instructions may be executed on means providing generic processing functions. Such means may be embedded for example in a personal computer, a smart phone, a network device, or the like. The method(s) may be thus computer-implemented, for example based algorithm(s) executable by the generic processing functions, an example of which is the at least one processor 902. The means may comprise transmission or reception means, for example one or more radio transmitters or receivers, which may be coupled or be configured to be coupled to one or more antennas, or transmitter(s) or receiver(s) of a wired communication interface. Although apparatus 900 is illustrated as a single device, it is appreciated that, wherever applicable, functions of apparatus 900 may be distributed to a plurality of devices.

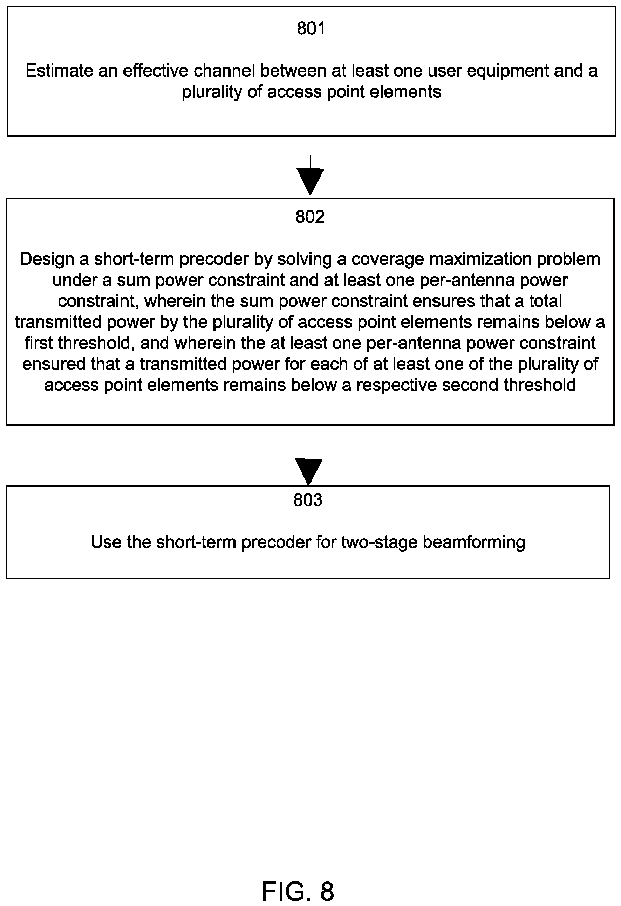

FIG. 8 illustrated a method according to an example embodiment.

The method may comprise estimating 801 an effective channel between at least one user equipment and a plurality of access point elements.

The method may comprise designing 802 a short-term precoder for the effective channel, the short-term precoder being designed by solving a coverage maximization problem under a sum power constraint and at least one per-antenna power constraint, wherein the sum power constraint ensures that a total transmitted power by the plurality of access point elements remains below a first threshold, and wherein the at least one per-antenna power constraint ensured that a transmitted power for each of at least one of the plurality of access point elements remains below a respective second threshold.

The method may comprise using 803 the short-term precoder for two-stage beamforming.

The method may be performed an apparatus, for example by apparatus 900 based on program code 906, when executed by processor 902, or based on circuitry configured to perform the method, as described above. Various examples of the methods are explained above, for example with reference to FIGs 1 to 6. It should be understood that example embodiments described may be combined in different ways unless explicitly disallowed.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

**Claims**

1. An apparatus, comprising:

   at least one processor; and
   at least one memory including computer program code;
   the at least one memory and the computer program code configured to, with the at least one processor, cause the apparatus at least to perform operations comprising:

   estimating an effective channel between at least one user equipment and a plurality of access point elements;
   designing a short-term precoder for the effective channel, the short-term precoder being designed by solving a coverage maximization problem under a sum power constraint and at least one per-antenna power constraint, wherein the sum power constraint ensures that a total transmitted power by the plurality of access point elements remains below a first threshold, and wherein the at least one per-antenna power constraint ensured that a transmitted power for each of at least one of the plurality of access point elements remains below a respective second threshold; and
   using the short-term precoder for two-stage beamforming.

2. The apparatus of claim 1, wherein the operations further comprise:
   formulating the coverage maximization problem under the sum power constraint and the at least one per-antenna power constraint as a convex optimization problem.

3. The apparatus of any of claims 1 to 2, wherein the operations further comprise:
   reformulating the coverage maximization problem by matrix lifting.

4. The apparatus of any of claims 1 to 3, wherein the operations further comprise:
   reformulating the coverage maximization problem by relaxing at least one rank-one constraint.

5. The apparatus of claim 1, wherein the operations further comprise:

   determining a per-antenna power adjustment matrix satisfying the at least one per-antenna power constraint by equality for at least one antenna of a plurality of antennas; and
   using the short-term precoder and the per-antenna power adjustment matrix for the two-stage beamforming.

6. The apparatus of claim 5, wherein designing the short-term precoder comprises setting the short-term precoder as a maximum ratio transmission solution.

7. The apparatus of any of claims 1 to 6, wherein the operations further comprise:

   estimating a signal-to-noise ratio; and
   selecting a modulation-coding scheme based on the estimated signal-to-noise ratio.

8. The apparatus of claim 7, wherein estimating the signal-to-noise ratio comprises:

   determining a signal-to-noise ratio under the sum power constraint;
   determining an average of a gap between the estimated signal-to-noise ratio under the sum power constraint and the signal-to-noise ratio to be estimated; and
   determining the signal-to-noise ratio to be estimated based on the signal-to-noise ratio under the sum power constraint and the average of the gap.

9. The apparatus of claim 7, wherein estimating the signal-to-noise ratio comprises:
using a deep neural network to estimate the signal-to-noise ratio, wherein the deep neural network takes one or more of the following as input:

   a location of a user equipment,
   an estimation of the effective channel,
   a first signal-to-noise ratio value and a corresponding power distribution for a first baseline which uses maximum ratio transmission as short-term precoder and linear scaling to satisfy the at least one per-antenna power constraint, or
   a second signal-to-noise ratio value for a second baseline which uses maximum ratio transmission as the short-term precoder and linear scaling to only satisfy the sum power constraint.

10. The apparatus of any of claim 1, wherein the coverage maximization problem is to maximize a signal-to-noise ratio.

11. The apparatus of any of claim 1, wherein the coverage maximization problem is to maximize a minimum signal-to-noise ratio over a plurality of user equipments.

12. The apparatus of any of claims 1 to 11, wherein the operations further comprise:

   determining a long-term precoder; and
   using the short-term precoder and the long-term precoder for the two-stage beamforming.

13. The apparatus of any of claims 1 to 12, wherein the first threshold is based on a maximum tolerated amount of interference generated by the plurality of access point elements.

14. The apparatus of any of claims 1 to 13, wherein the second threshold is based on an operating range of a power amplifier associated with the access point element.

15. The apparatus of any of claims 1 to 14, wherein the plurality of access point elements comprises one or more of: a plurality of antennas, a plurality of panels, or a plurality of access points.

16. The apparatus of any of claims 1 to 15, wherein the coverage maximization problem is under a per-antenna power constraint for each access point element, wherein, for each access point element, the per-antenna power constraint ensured that a transmitted power for the access point element remains below a respective second threshold.

17. A method, comprising:

estimating an effective channel between at least one user equipment and the plurality of access point elements;
designing a short-term precoder for the effective channel by solving a coverage maximization problem under a sum power constraint and at least one per-antenna power constraint, wherein the sum power constraint ensures that a total transmitted power by the plurality of access point elements remains below a first threshold, and wherein the at least one per-antenna power constraint ensured that a transmitted power for each of at least one of the plurality of access point elements remains below a respective second threshold; and
using the short-term precoder for two-stage beamforming.

18. The method of claim 17, further comprising:
formulating the coverage maximization problem under the sum power constraint and the at least one per-antenna power constraint as a convex problem.

19. The method of claim 17, further comprising:

   determining a per-antenna power adjustment matrix satisfying the at least one per-antenna power constraint by equality for at least one antenna of a plurality of antennas; and
   using the short-term precoder and the per-antenna power adjustment matrix for the two-stage beamforming.

20. A computer program comprising instructions, which, when executed by an apparatus, cause the apparatus to perform the method according to any of claims 17 to 19.

FIG. 1

FIG. 2

FIG. 3A

301 — Long-term precoder and short-term channel estimation

long-term CSI
Utility function

$V$, $h_{eff}^H$

SPC: $P_{TX}$
PAPC: $P_{UB}^{(n)}$, $\forall n$
Utility function (e.g., max SNR)

302 — Design short-term precoder $d$

$d$

noise variance $\sigma^2$, location, etc.

303 — SNR calculation & MCS selection

SNR, MCS

FIG. 3B

$h_{eff}^H$ and $V$
$P_{TX}$ and $P_{UB}^{(n)}$
Utility: e.g., max SNR

302a — Formulate the coverage maximization problem as a convex problem, e.g., by matrix lifting and rank-one relaxation

302

$D$

302b — Solve the coverage maximization problem

$d$

$h_{eff}^H$ and $\sigma^2$

303 — $SNR = \|h_{eff}^H d\|^2 / \sigma^2$ and selecting MCS accordingly.

SNR, MCS

FIG. 4

long-term CSI →

Utility function →

**601**
Long-term precoder and short-term channel estimation

$V, h_{eff}^H$ →

**602**
Design short-term precoder $d$ and power adjustment matrix $\Gamma$

SPC: $P_{TX}$
PAPC: $P_{UB}^{(n)}, \forall n$
Utility function
(e.g., max SNR)

$d, \Gamma$ →

**603**
SNR calculation & MCS selection

→ SNR, MCS

noise variance $\sigma^2$, location, etc.

## FIG. 5A

$h_{eff}^H$ →

**602a**    **602**
Set $d$ to MRT solution to the effective CSI, $d = h_{eff}$

$V$ →

$P_{TX}$ and $P_{UB}^{(n)}$ →

Utility: e.g., max SNR →

$d$ →

**602b**
Set $\Gamma$ to ensure utilizing the maximum possible power per antenna

$d$ →

$\Gamma$ →

**603**
Estimating SNR and selecting MCS accordingly

→ SNR, MCS

$h_{eff}^H, \sigma^2, SNR_{UB}^{dB}$, location, $SNR_{LB}^{dB}$, power distributions achieving $SNR_{LB}^{dB}$, etc.

## FIG. 5B

$SNR_{UB}^{dB}$

Location

$SNR_{LB}^{dB}$

Power distribution
achieving $SNR_{LB}^{dB}$

$h_{eff}$

DNN

$SNR_x^{est}$

## FIG. 6

900

902 PROCESSOR

904 MEMORY
PROGRAM
CODE 906

COMMUNICATION
INTERFACE
908

USER
INTERFACE
910

## FIG. 7

801

Estimate an effective channel between at least one user equipment and a plurality of access point elements

802

Design a short-term precoder by solving a coverage maximization problem under a sum power constraint and at least one per-antenna power constraint, wherein the sum power constraint ensures that a total transmitted power by the plurality of access point elements remains below a first threshold, and wherein the at least one per-antenna power constraint ensured that a transmitted power for each of at least one of the plurality of access point elements remains below a respective second threshold

803

Use the short-term precoder for two-stage beamforming

FIG. 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THOMAS CHRISTO KURISUMMOOTTIL ET AL: "Hybrid Beamforming Design in Multi-Cell MU-MIMO Systems with Per-RF or Per-Antenna Power Constraints", 2018 IEEE 88TH VEHICULAR TECHNOLOGY CONFERENCE (VTC-FALL), IEEE, 27 August 2018 (2018-08-27), pages 1-6, XP033535438, DOI: 10.1109/VTCFALL.2018.8690820 [retrieved on 2019-04-12] | 1-3,7,9, 12-18,20 | INV. H04B7/024 H04B7/0456 H04B7/06 |
| Y | * pages 1,2,3,4 * | 4-6,10, 11,19 | |
| A | | 8 | |
| | ----- | | |
| Y | WIESEL A ET AL: "Zero-Forcing Precoding and Generalized Inverses", IEEE TRANSACTIONS ON SIGNAL PROCESSING, IEEE, USA, vol. 56, no. 9, 1 September 2008 (2008-09-01), pages 4409-4418, XP011233002, ISSN: 1053-587X, DOI: 10.1109/TSP.2008.924638 | 4,10 | TECHNICAL FIELDS SEARCHED (IPC) |
| A | * page 5 * * equation 4 * | 8 | H04B |
| | ----- | | |
| Y | US 8 301 089 B2 (SHANY YARON [IL]; SHAPIRA NIR [IL]; CELENO COMM LTD [IL]) 30 October 2012 (2012-10-30) | 5,6,19 | |
| A | * column 2, lines 37,56 * * column 5, line 19 * | 8 | |
| | ----- | | |
| | -/-- | | |

The present search report has been drawn up for all claims

| Place of search | Date of completion of the search | Examiner |
|---|---|---|
| Munich | 8 April 2024 | Oana, Andrei |

EPO FORM 1503 03.82 (P04C01)

page 1 of 2

Europäisches
Patentamt

European
Patent Office

Office européen
des brevets

## EUROPEAN SEARCH REPORT

Application Number

EP 23 20 5149

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JUPING ZHANG ET AL: "Deep Learning Enabled Optimization of Downlink Beamforming Under Per-Antenna Power Constraints: Algorithms and Experimental Demonstration", ARXIV.ORG, CORNELL UNIVERSITY LIBRARY, 201 OLIN LIBRARY CORNELL UNIVERSITY ITHACA, NY 14853, 28 February 2020 (2020-02-28), XP081610192, DOI: 10.1109/TWC.2020.2977340 | 11 | |
| A | * page 2 * | 8 | |
| | ----- | | |

TECHNICAL FIELDS
SEARCHED      (IPC)

The present search report has been drawn up for all claims

| Place of search | Date of completion of the search | Examiner |
|---|---|---|
| Munich | 8 April 2024 | Oana, Andrei |

EPO FORM 1503 03.82 (P04C01)

page 2 of 2

**ANNEX TO THE EUROPEAN SEARCH REPORT
ON EUROPEAN PATENT APPLICATION NO.**

EP 23 20 5149

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2024

| Patent document cited in search report | | Publication date | Patent family member(s) | | Publication date |
|---|---|---|---|---|---|
| US 8301089 | B2 | 30-10-2012 | EP | 2540127 A1 | 02-01-2013 |
| | | | US | 2011210892 A1 | 01-09-2011 |
| | | | US | 2012286996 A1 | 15-11-2012 |
| | | | US | 2013040580 A1 | 14-02-2013 |
| | | | US | 2014294113 A1 | 02-10-2014 |
| | | | WO | 2011104718 A1 | 01-09-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. WIESEL** ; **Y. C. ELDAR** ; **S. SHAMAI**. Zero-Forcing Precoding and Generalized Inverses. *IEEE Transactions on Signal Processing*, September 2008, vol. 56 (9), 4409-4418